# EUROPÄISCHE PATENTSCHRIFT

(11) **EP 1 209 206 B1**
(45) Veröffentlichungstag und Bekanntmachung des Hinweises auf die Patenterteilung: **04.05.2005**
(21) Anmeldenummer: 01125468.7
(22) Anmeldetag: 06.11.2001
(51) Int. Cl.: C09D 5/44, C09D 163/00

(54) **Selbstvernetzende wasserverdünnbare Bindemittel**
Water-dilutable, crosslinkable binder resin
Résine de liaison réticulable, diluable dans l'eau

(30) Priorität: 15.11.2000 AT 19272000
(43) Veröffentlichungstag der Anmeldung: 29.05.2002
(73) Patentinhaber: Surface Specialties Austria GmbH, 8402 Werndorf (AT)
(72) Erfinder: Paar, Willibald, Dr., 8010 Graz (AT); Feola, Roland, Dr., 8045 Graz (AT); Gmoser, Johann, 8045 Graz (AT); Gobec, Michael, Dr., 8010 Graz (AT)
(74) Vertreter: Deckers, Hellmuth, Dr.

(56) Entgegenhaltungen:
- EP-A- 0 158 128
- EP-A- 0 179 184
- GB-A- 2 050 381

## Beschreibung

Die Erfindung betrifft ein Verfahren zum Beschichten von Substraten mit bei Raumtemperatur selbstvemetzenden wasserverdünnbaren Bindemitteln.

Lackbindemittel auf der Basis von Umsetzungsprodukten von Mannich-Basen und Epoxidharzen werden in einer Reihe von Veröffentlichungen beschrieben. Gemäß den DE-A 20 33 770, 23 20 301, 23 57 045, 24 19 179, 25 41 801, 25 54 080, 27 11 385 und 30 45 251 werden Mannich-Basen, welche aus mehrwertigen Phenolen, sekundären Aminen und Formaldehyd erhalten wurden, mit Epoxidharzen umgesetzt, wobei sowohl die Phenole als auch die Epoxidharze Modifikationen verschiedener Art, z.B. mit halbverkappten Diisocyanaten, anderen Phenolen oder Metallsalzen unterworfen werden können. Aus der EP 0 158 128 A1 ist ein Verfahren zur Herstellung von kathodisch abscheidbaren Elektrotauchlack-Bindemitteln auf der Basis von modifizierten Epoxidharzen bekannt, mit den so hergestellten Bindemitteln werden separat hergestellte Pigmentpasten auf Basis von Epoxidharzen abgeleitet von Bisphenol A, Phthalsäurehalbestern, Diäthylaminopropylamin und Oxazolidinen aus Aminoäthyläthanolamin, Alkylacrylaten und Formaldehyd aufgelackt. Direktes Einarbeiten von Pigmenten in diese Bindemittel ist nicht erwähnt.

Wie sich aus den genannten Literaturstellen ergibt, benötigen Bindemittel dieser Art Einbrenntemperaturen um 190 °C zur Vernetzung, wobei auch dann die Filme z.B. in ihrer Salzsprühfestigkeit keineswegs den Ansprüchen der Praxis in der Automobilindustrie gerecht werden. Überdies erfolgt bei der Vernetzung dieser Produkte eine Abspaltung von Formaldehyd und Aminen, was zu einer Belästigung der Umwelt führen kann. Ein Großteil der obengenannten Modifikationen dient daher weniger einer Verbesserung der Filmeigenschaften, als einer Verminderung der Abspaltprodukte. So wird im Falle der Modifizierung mit halbblockierten Diisocyanaten in der DE-A 25 54 080 ausdrücklich angegeben, daß die Isocyanatgruppen zur Vernetzung wenig beitragen und nur zum Einfangen frei werdender Amine dienen.

Aus der WO 83/00872 sind kathodisch abscheidbare Elektrotauchlack-Bindemittel bekannt, welche durch Mischkondensation von partiell entfunktionalisierten Epoxidharzen und Phenolresolen und gleichzeitige oder anschließende Umsetzung der Epoxidgruppen mit primären oder sekundären Aminen erhalten werden. Ein wesentlicher Nachteil bei der Herstellung dieser Produkte liegt in der Notwendigkeit der Herstellung der Phenolresole, was bekanntermaßen mit einem beträchtlichen Zeitaufwand verbunden ist und relativ große Mengen von Phenol- und salzhaltigen Abwässern ergibt. Gegebenenfalls im Harz verbleibende Salzreste können überdies zu Störungen bei der elektrischen Abscheidung führen. Aus der GB-A 2,050,381 sind kathodisch abscheidbare Überzugsmittel bekannt, welche durch Mischen und Erwärmen auf mindestens 50 °C aus Epoxidharz-Aminaddukten und verätherten Phenol-Formaldehyd- und/oder Aminoplastharzen erhalten werden. Durch eine teilweise Kondensation der Komponenten soll die Emulsionsstabilität der protonierten Produkte in Wasser, im Vergleich zu Mischungen der genannten Komponenten verbessert werden. In den gemäß dieser Literaturstelle eingesetzten Epoxidharz-Aminaddukten liegen im wesentlichen tertiäre Aminogruppen vor, da die Umsetzung unter Bedingungen erfolgt, welche zu einer weitgehend vollständigen Reaktion der Aminowasserstoffe führen. Aufgrund ihres Aufbaues benötigen Produkte dieser Art für eine ausreichende Vernetzung Einbrenntemperaturen von über 170 °C.

Es wurde nun gefunden, daß Umsetzungsprodukte von Epoxid-Amin-Addukten mit Formaldehyd und solchen Verbindungen, die mit Formaldehyd Kondensationsharze bilden können, zu bei Raumtemperatur selbstvernetzenden Bindemitteln formuliert werden können. Dabei wird die Umsetzung vorzugsweise so durchgeführt, daß nicht ein vorgeformtes Formaldehyd-Kondensationsharz mit Epoxid-Amin-Addukten reagiert wird, sondern daß in der Reaktionsmischung zu Beginn Epoxid-Amin-Addukte, Formaldehydharzbildner und Formaldehyd oder eine Formaldehyd-Quelle jeweils separat vorliegen.

Die Erfindung betrifft daher ein Verfahren zur Beschichtung von Substraten, umfassend die Schritte
a) Herstellen eines bei Raumtemperatur selbstvernetzenden wäßrigen Beschichtungsmittels aus einem wasserverdünnbaren Bindemittel, erhältlich durch
   aa) Umsetzung von Epoxid-Amin-Addukten **A** mit Formaldehyd **F** oder Verbindungen, die bei den Umsetzungsbedingungen Formaldehyd freisetzen, wie Paraformaldehyd und Trioxan, und Formaldehydharz-Bildnern **B,** ausgewählt aus Phenolen **B1**, substituierten Harnstoffen und Harnstoffen **B2**, Melamin **B3**, Guanaminen **B4** und Mischungen der genannten Formaldehydharz-Bildnern, zu einem Umsetzungsprodukt **ABF,**
   ab) Neutralisieren des Umsetzungsproduktes **ABF** in einem Ausmaß von mindestens 5 %,
   ac) Verdünnen des neutralisierten Umsetzungsprodukts **ABF** mit deionisiertem Wasser,
   ad) Verarbeiten der Umsetzungsprodukte **ABF** mit Pigmenten, Füllstoffen und anderen Zusatzstoffen zu pigmentierten Lacken durch Dispergieren der Umsetzungsprodukte **ABF** mit den Pigmenten,
b) Applizieren des Beschichtungsmittels aus dem Schritt a) auf ein Substrat, und
c) Trocknen der Beschichtung bei Raumtemperatur,
wobei der Schritt ad) nach aa), ab) oder ac) ausgeführt werden kann.

Als "wasserverdünnbar" werden solche Bindemittel bezeichnet, die - gegebenenfalls nach partieller Neutralisation - mit Wasser stabile Mischungen bilden, die sich bei Lagerung bei Raumtemperatur (20 °C) über mindestens 4 Wochen nicht makroskopisch entmischen oder sedimentieren.

Die Epoxid-Amin-Addukte **A** werden durch Umsetzung von Epoxidharzen **A1** mit mindestens 2 Epoxidgruppen pro Molekül und einem spezifischen Epoxidgruppengehalt SEG von 1000 bis 5600 mmol/kg mit aliphatischen Aminen **A2** mit einem bis zwanzig, bevorzugt 4 bis 18 Kohlenstoffatomen, die mindestens eine primäre Aminogruppe und gegebenenfalls eine weitere primäre oder tertiäre Aminogruppe enthalten und gegebenenfalls einer Verbindung **A3** mit mindestens einer Carboxylgruppe oder mindestens einer sekundären Aminogruppe erhalten. Die Reaktion wird so durchgeführt, daß nach ihrem Ende in der Reaktionsmischung keine Epoxidgruppen mehr nachweisbar sind.

Die für die Erfindung einsetzbaren Epoxidharze **A1** sind handelsübliche Di- oder Polyepoxidverbindungen, wie sie durch Umsetzung von mehrwertigen Phenolen, insbesondere dem Bisphenol A oder Phenolnovolaken und Epichlorhydrin erhalten werden. Gegebenenfalls können auch andere Epoxidharze, z.B. auf Basis von Polyolen eingesetzt werden. Produkte dieser Art sind dem Fachmann bekannt und werden in der Literatur in großer Zahl beschrieben. Bevorzugt werden für das erfindungsgemäße Verfahren Epoxidharze auf der Basis von Bisphenol A oder Phenolnovolaken mit einem spezifischen Epoxidgruppengehalt SEG von 1,0 bis 5,5 mol/kg ("Epoxidäquivalentgewicht" von 180 bis 1000 g/mol) eingesetzt.

Als Amine **A2** werden primäre Monoalkylamine bevorzugt, insbesondere solche, deren Alkylrest 4 und mehr Kohlenstoffatome aufweist oder primäre Alkylendiamine oder Diamine, welche neben der primären Aminogruppe noch eine tertiäre Aminogruppe, z.B. eine Dialkylaminogruppe aufweisen. Als bevorzugte Vertreter seien das n- bzw. isoButylamin, Hexylamine, insbesondere n-Hexylamin, das 2-Äthylhexylamin, Äthylendiamin und seine Homologen sowie primär-tertiäre Diamine, wie Dimethylaminopropylamin, Diäthylaminopropylamin und Homologe dieser Reihe genannt. Besonders bevorzugt werden Mischungen aus Alkylaminen bzw. Alkylendiaminen und Dialkylaminoalkylaminen eingesetzt.

Die Modifikatoren **A3** sind ausgewählt aus Carboxylverbindungen und Verbindungen mit mindestens einer sekundären Aminogruppe. Bevorzugt werden beispielsweise Carboxylgruppen-haltige Adduktverbindungen von Maleinsäureanhydrid an ungesättigte Öle und/oder ungesättigte Kohlenwasserstoffverbindungen eingesetzt, deren Anhydridgruppen unter Halbesterbildung mit Monohydroxyverbindungen geöffnet wurden, wobei die freien Carboxylgruppen gegebenenfalls teilweise mit Monoepoxidverbindungen umgesetzt werden. Durch diese Modifikation kann die Filmoberfläche und die Flexibilität der Filme wesentlich verbessert werden.

Die zur Modifizierung des Epoxidharz-Amin-Adduktes geeigneten Carboxylverbindungen dieser Art werden in bekannter Weise durch Anlagerung von Maleinsäureanhydrid an ungesättigte Öle, z.B. Holzöl, Leinöl, dehydratisiertes Rizinusöl, Sojaöl, Sonnenblumenöl und ähnliche natürliche Öle erhalten. Ebenso können auch synthetisch hergestellte Hydroxygruppen-freie Ester der in den obengenannten Ölen enthaltenen Fettsäuren bzw. der Tallölfettsäuren mit Polyolen als Ausgangsmaterial herangezogen werden. Bevorzugt werden als Polyenverbindung ungesättigte niedermolekulare Kohlenwasserstoffpolymere oder - oligomere zur Umsetzung mit dem Maleinsäureanhydrid herangezogen. Beispiele für diese Verbindungsklasse sind die sogenannten Polybutadienöle, das sind flüssige Oligomere des Butadiens mit verschiedener stereospezifischer Struktur oder die entsprechenden Oligomeren von Pentadienen oder Cyclopentadien, wobei auch gemischte Oligomere eingesetzt werden können. Diese Verbindungen weisen üblichweise molare Massen (Gewichtsmittel M_{w}) zwischen 400 und 3000 g/mol auf. Selbstverständlich können auch Mischungen dieser Oligomeren zur Adduktbildung mit dem Maleinsäureanhydrid herangezogen werden.

Die Menge des Maleinsäureanhydrids wird so gewählt, daß die daraus hergestellte Carboxylverbindung eine Säurezahl von 30 bis 130 mg/g, vorzugsweise 35 bis 80 mg/g aufweist.

Zur Halbesterbildung werden die Maleinsäureanhydrid- Addukte mit Monohydroxyverbindungen in bekannter Weise bei 50 bis 150 °C umgesetzt. Als Monohydroxyverbindungen kommen dabei gesättigte oder ungesättigte Monoalkohole mit 1 bis 18 C-Atomen, wie Methanol und seine Homologe, Fettalkohole, Allylalkohol u.ä. zum Einsatz. Ebenso können als Monohydroxyverbindungen auch Glykolmonoester der (Meth)acrylsäure, wie Hydroxyäthyl(meth)acrylat, Hydroxypropyl(meth)acrylat sowie die weiteren homologen und isomeren Verbindungen eingesetzt werden. Bei den ungesättigten Monohydroxyverbindungen wird vorteilhafterweise die Umsetzung in Gegenwart von Inhibitoren, wie Hydrochinon, durchgeführt.

Eine Möglichkeit zur Verminderung der Anzahl der Carboxylgruppen dieser Halbester besteht in der Reaktion dieser Halbester mit Monoepoxidverbindungen, wie Estern von epoxidierten Fettsäuren oder Glycidylestern oder -äthern. Gut geeignet für diesen Zweck sind beispielsweise die Glycidylester der KOCH-Säuren, insbesondere solche, welche am tertiären Kohlenstoffatom mindestens zwei Alkylreste mit mindestens einem C-Atom aufweisen.

Zur Herstellung der Epoxid-Amin-Addukte **A**, die für die Erfindung geeignet sind, werden die Verbindungen **A2** vorzugsweise in einer solchen Menge eingesetzt, daß das Verhältnis der Stoffmenge der Aminogruppen in **A2** zur Stoffmenge der Epoxidgruppen in **A1** 0,6:1 bis 1:1 beträgt, und daß vorzugsweise das Verhältnis der Summe der Stoffmengen der Carboxylgruppen und der sekundären Aminogruppen in den Verbindungen **A3** zur Stoffmenge der Epoxidgruppen in **A1** 0:1 bis 0,4 : 1 beträgt.

Gemäß der Erfindung wird das Epoxid-Amin-Addukt **A** mit einer oder mehreren Verbindungen **B** und Formaldehyd **F** oder einer Formaldehyd-abspaltenden Verbindung umgesetzt.

Dabei werden die Mengen der Formaldehydharzbildner **B** und des Formaldehyds **F** bevorzugt so gewählt, daß das Verhältnis der Stoffmenge der in **A** verbliebenen aminischen wasserstoffatome (NH-Gruppen) zur Stoffmenge der Verbindungen **B** 0,5:1 bis 1:1 beträgt, und daß das Verhältnis der Stoffmenge des Formaldehyds zur Stoffmenge der gegenüber Formaldehyd reaktiven Gruppen in **B** 0,25:1 bis 0,9: 1, besonders bevorzugt 0,6:1 bis 0,8:1, beträgt.

Weiterer Gegenstand der vorliegenden Erfindung ist ein Verfahren zur Herstellung der Produkte **ABF,** wobei die Umsetzung der Komponente **A1, A2** und gegebenenfalls **A3** bei einer Temperatur von 50 bis 120 °C solange erfolgt, bis keine Epoxidgruppen mehr nachweisbar sind. In der zweiten Stufe wird das Epoxid-Amin-Addukt **A** gemeinsam mit den Formaldehydharz-Bildnern **B** und dem Formaldehyd bei einer Temperatur von 50 bis 90 °C umgesetzt, bis der Formaldehyd verbraucht ist. Das Reaktionsprodukt wird mit Säuren neutralisiert und anschließend in die wäßrige Phase überführt, wobei gegebenenfalls wasserverdünnbare organische Lösungsmittel zugesetzt werden können.

Das erfindungsgemäße Verfahren zeichnet sich durch seine einfache Durchführbarkeit aus. Ein besonderer Vorteil liegt im Fehlen von unbrauchbaren Nebenprodukten.

Die aus den erfindungsgemäß hergestellten Bindemitteln in geeigneter Weise formulierten Überzugsmittel zeigen ausgezeichnete Eigenschaften nach Applikation und Trocknung des Lackfilms bei Raumtemperatur. Der Grund dafür dürfte in der Hydrolysefestigkeit des durch direkte Verknüpfung von Epoxidharz, Amin und Formaldehydharz-Bildner **B** entstandenen Moleküls zu finden sein. Die Produkte ergeben bereits bei Trocknungstemperaturen ab 10 °C auch ohne Verwendung von Katalysatoren Filme mit optimaler Korrosionsfestigkeit.

Die Epoxidharze **A1** werden in der ersten Reaktionsstufe, vorzugsweise in Gegenwart eines aprotischen Lösungsmittels, mit dem primären Amin **A2** zu einem sekundären Aminogruppen aufweisenden Epoxidharz-Amin-Addukt umgesetzt. Das Verhältnis der Stoffmenge der verfügbaren Epoxidgruppen des Epoxidharzes **A1** zu der der primären Aminogruppen in **A2** ist dabei bevorzugt 1:0,6 bis 1:1,0 mol/mol. Die Umsetzung erfolgt bevorzugt bei 50 bis 90 °C .

Als Lösungsmittel, deren Anwesenheit für die Reaktionsführung in einzelnen Fällen wesentlich ist, werden aromatische Kohlenwasserstoffe, wie Toluol oder Xylol, oder Glykoldiäther, wie Diäthylenglykoldimethyläther eingesetzt. Es können auch Glykolmonoäther verwendet werden. Die Menge des Lösungsmittels beträgt vorzugsweise zwischen 10 und 50 % bezogen auf das Epoxid-Amin-Addukt.

Das Epoxid-Amin-Addukt kann gegebenenfalls mit Verbindungen **A3** ausgewählt aus Carboxylverbindungen, wie gesättigten oder ungesättigten Fettsäuren, Carboxylgruppen aufweisenden Polyestern und Carboxylgruppen aufweisenden anderen Präpolymeren, z.B. auf Acrylatbasis, modifiziert sein. Die Modifizierungsmittel **A3** werden dabei bevorzugt in einer solchen Menge eingesetzt, daß bis zu 40 % der ursprünglich in **A1** vorhandenen verfügbaren Epoxidgruppen verbraucht werden. Als Fettsäuren werden bevorzugt Monocarbonsäuren mit 7 bis 20 C-Atomen synthetischer oder natürlicher Herkunft eingesetzt. Beispielsweise können Benzoesäure, Isooctan-und Isononansäure, α-verzweigte synthetische Monocarbonsäuren mit C₈ - C₁₂-Alkylresten (sog. "KOCH-Säuren") oder Ölfettsäuren und Tallölfettsäuren verwendet werden. Andere Monocarboxylverbindungen zur Modifizierung der Epoxidharz-Amin-Addukte sind Halbester von Dicarbonsäuren mit Monoalkoholen mit mehr als 3 C-Atomen oder mit Oxazolidinen modifizierte Carbonsäuren. Die Herstellung der letzteren ist beispielsweise in der AT-PS 375 946 beschrieben. Die Oxazolidine dienen dabei als zusätzliche Formaldehydspender. Die Umsetzung der Epoxidharze **A1** mit den Carboxylgruppen tragenden Modifikatoren **A3** erfolgt zweckmäßig vor der Umsetzung mit den Aminen **A2** bei 90 bis 120 °C.

Die Umsetzung dieser Gruppe der Carboxylverbindungen **A3** mit den Epoxidgruppen des Epoxidharzes **A1** erfolgt bevorzugt bei 90 bis 150 °C. Vorteilhafterweise wird die Reaktion bis zur vollständigen Bindung der modifizierenden Komponente geführt.

Als weitere Modifikatoren können auch sekundäre Amine, insbesondere sekundäre Alkylamine eingesetzt werden. Durch die dabei resultierenden tertiären Aminogruppen kann die Löslichkeit der Produkte beeinflußt werden.

Die zum Epoxidharz-Amin-Addukt führende Reaktionsstufe wird bis zu einem Epoxidwert von praktisch 0 geführt, d.h., daß die erhaltenen Epoxidharz-Amin-Addukte frei von Epoxidgruppen sind.

Das resultierende gegebenenfalls mit Carboxyl- bzw. Aminverbindungen **A3** modifizierte Epoxid-Amin-Addukt **A** wird in der erfindungsgemäßen Reaktion mit Formaldehyd oder einer unter den Reaktionsbedingungen Formaldehyd abspaltenden Verbindung und einem Formaldehydharzbildner **B** ausgewählt aus phenolischen Verbindungen **B1**, nämlich ein-und mehrwertigen Phenolen, Alkylphenolen, Aminoalkylierungsprodukten von monosubstituierten ein- oder zweiwertigen Phenolen und den Aminoplastharzbildnern **B2** vom Typ des Harnstoffs, des Melamins oder des Guanamins umgesetzt. Dabei werden die Mengen der Reaktanden bevorzugt so gewählt, daß das Verhältnis der Stoffmenge der NH-Gruppen im Epoxidharz-Amin-Addukt A zur Stoffmenge der Formaldehydharzbildner **B** 1:0,5 bis 1:1 mol/mol beträgt, und daß das Verhältnis der Stoffmengen der formaldehydreaktiven Stellen in den Formaldehydharzbildnern **B** zur Stoffmenge an Formaldehyd (bzw. an entstandenen Methylolgruppen im Reaktionsprodukt) 1:0,25 bis 1:0,9 mol/mol beträgt. Die Reaktion erfolgt bevorzugt bei 50 bis 90 °C und wird bis zu einer möglichst weitgehenden Bindung des eingesetzten Formaldehyds geführt.

Als Phenolkomponente **B1** wird Phenol selbst in seinen handelsüblichen Lieferformen eingesetzt, z.B. liquefactum (90 %), oder Alkylphenole, wie die Methyl-, Butyl- oder höhere Alkylphenole, wie Nonylphenol oder Diphenole der Formel HO - Ar - R - Ar - OH, wobei Ar einen Arylenrest, insbesondere 1,4-Phenylen-, und R einen geradkettigen oder verzweigten Alkylenrest mit 1 bis 5 C-Atomen bedeutet, vorzugsweise wird Bisphenol A eingesetzt. Die eingesetzten Phenole müssen zur Erzielung der gewünschten Eigenschaften mindestens 2 formaldehydreaktive Stellen aufweisen.

Das als phenolischer Formaldehydharzbildner **B1** eingesetzte ein-oder mehrwertige Phenol und/oder Alkylphenol kann auch teilweise oder vollständig durch andere formaldehydreaktive Verbindungen ersetzt werden. So wurde gefunden, daß die Phenole durch Aminoverbindungen **B2** vom Typ des Harnstoffs, Thioharnstoffs, Melamins oder der Guanamine ersetzt werden können, wodurch eine weitere Verbesserung der Löslichkeitscharakteristik und der Farbechtheit des Films erzielt wird.

Diese Variante ist dadurch gekennzeichnet, daß man die eingesetzten Phenolverbindungen **B1** ganz oder teilweise durch formaldehydreaktive Aminoverbindungen **B2** vom Typ des Harnstoffs, Thioharnstoffs, Imidoharnstoffs, des Melamins **B3**, oder der Guanamine **B4** wie Acetoguanamin oder Benzoguanamin, oder Mischungen dieser Verbindungen ersetzt und in einer gemeinsamen Reaktionsstufe mit der sekundäre Aminogruppen aufweisenden Aminoverbindung und dem Formaldehyd umsetzt. Bevorzugt beträgt der Massenanteil von aminischen Formaldehydharzbildnern der Gruppen **B2** bis **B4** mindestens 20 %, bezogen auf die Summe der Massen aller Komponenten der Art **B**.

Der teilweise oder vollständige Ersatz der phenolischen Verbindungen **B1** durch die formaldehydreaktiven Aminoverbindungen **B2** führt neben einer Verbesserung der Löslichkeitscharakteristik auch zu erhöhter Haftfestigkeit des abgeschiedenen Films sowohl auf dem beschichteten Substrat als auch gegenüber möglichen Folgeschichten.

Bevorzugt wird Harnstoff, wenn dieser als Komponente **B2** eingesetzt wird, in Form einer wäßrigen Lösung mit einem Festkörper-Massenanteil von 30 bis 50 %, insbesondere ca. 40 %, verwendet.

Als substituierte Harnstoffe werden zusammenfassend Thioharnstoff, N-Alkyl(thio)harnstoffe, N,N-Dialkyl- und N,N'-Dialkyl(thio)harnstoffe mit C₁- bis C₂₀-Alkylresten, (gegebenenfalls am Ring substituierter) Äthylen- und Propylenharnstoff sowie Glykoluril bezeichnet. Besonders bevorzugt ist unsubstituierter Harnstoff.

Der Formaldehyd wird vorzugweise als Paraformaldehyd in einer der handelsüblichen Formen mit einem effektiven Formaldehydgehalt von 80 bis 100 % eingesetzt. Als Formaldehydspender oder Formaldehyd-abspaltende Verbindungen können zusätzlich auch solche Verbindungen verwendet werden, welche unter den Verfahrensbedingungen Formaldehyd abgeben. Solche Verbindungen sind Paraformaldehyd, die cyclischen Oligomeren Trioxan und Tetroxan, und auch beispielsweise Oxazolidinverbindungen, welche z.B. in Form ihrer Carboxylderivate oder als Amine zur Modifikation des Epoxidharzes herangezogen werden. Der Formaldehyd wird in einer solchen Menge eingesetzt, daß das Stoffmengenverhältnis von Formaldehyd zu Formaldehyd-reaktiven Gruppen in der Reaktionsmischung 25 bis 90, vorzugsweise 30 bis 85, besonders bevorzugt 60 bis 80 mol/(100 mol) beträgt. Zur Erzielung einer selbstvernetzenden Struktur ist es vorteilhaft, daß die Stoffmenge an Formaldehyd mindestens 30 % größer ist als die der vorhandenen NH-Gruppen.

Zur Herstellung von wäßrigen Lacken werden die basischen Gruppen des Reaktionsproduktes **ABF** mit Säuren, vorzugsweise mit Ameisensäure, Essigsäure oder Milchsäure, partiell (d. i. zu mindestens 5 %) oder vollständig neutralisiert. Zum Neutralisieren können auch anorganische mehrbasige Säuren wie Phosphorsäure(teilester) oder Borsäure verwendet werden. Für eine praxisgerechte Verdünnbarkeit genügt üblicherweise eine Neutralisation von 10 bis 40 % der basischen Gruppen oder eine Menge von ca. 20 bis 60 mmol Säure pro 100 g Festharz. Die Bindemittel werden dann mit deionisiertem Wasser auf die gewünschte Konzentration verdünnt; gegebenenfalls werden sie vor der Neutralisation oder vor der Verdünnung oder im teilverdünnten Zustand mit Pigmenten, Füllstoffen und anderen Zusatzstoffen zu pigmentierten Lacken verarbeitet.

Die wäßrigen Lacke, die die erfindungsgemäßen Bindemittel enthalten, lassen sich insbesondere zur Beschichtung von metallischen Substraten anwenden, wobei sie dem beschichteten Substrat einen hervorragenden Korrosionsschutz verleihen. Sie lassen sich ebenfalls mit Vorteil zur Beschichtung von temperaturempfindlichen Substraten wie Holz, Papier, Karton und textilen Flächen einsetzen, da die erfindungsgemäßen Bindemittel bereits bei Raumtemperatur rasch trocknen.

Selbstverständlich lassen sie sich auch zur Beschichtung von mineralischen Substraten wie Stein, Beton, Putz- und Mörtelschichten verwenden.

Bei der Beschichtung von Holz ist durch die Anwendung der erfindungsgemäßen Bindemittel in Primern eine ausgezeichnete Isolierwirkung gegen störende Inhaltsstoffe aus dem Holz gegeben.

### Beispiele

Die nachstehenden Beispiele erläutern die Erfindung, ohne sie in ihrem Umfang zu beschränken. In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

Die folgenden Abkürzungen werden in den Beispielen benützt:
- EPH I: Diepoxidharz auf Basis von Bisphenol A, spezifischer Epoxidgruppengehalt 5,26 mol/kg ("Epoxidäquivalentgewicht" ca. 190 g/mol)
- EPH II: Diepoxidharz auf Basis von Bisphenol A, spezifischer Epoxidgruppengehalt 2,1 mol/kg ("Epoxidäquivalentgewicht" ca. 475 g/mol)
- EPH III: Diepoxidharz auf Basis von Polypropylenglykol, spezifischer Epoxidgruppengehalt 3,13 mol/kg ("Epoxidäquivalentgewicht" ca. 320 g/mol)
- DEAPA: Diäthylaminopropylamin
- EHA: 2-Äthylhexylamin
- NBA: n-Butylamin
- HMDA: Hexamethylendiamin
- DEA: Diäthylamin
- BPA: Bisphenol A
- PH: Phenol, liquefactum 91 %
- NPH: Nonylphenol
- PTB: p-tert. Butylphenol
- B180: flüssiges Polybutadienöl (ca. 75 % 1,4 cis-, ca. 24 % 1,4-trans- und ca. 1 % Vinyl-Doppelbindungen; molare Masse ca. 1500 g/mol (± 15 %), Jodzahl ca. 450 g/(100g))
- MSA: Maleinsäureanhydrid
- CE: technisches Gemisch aus Glycidylestern der 1,1-Dimethyl-(C₇-C₉)-alkancarbonsäuren
- PF 91: Paraformaldehyd 91%ig
- HMDA/BUAC: Umsetzungsprodukt aus HMDA (1 mol) und n-Butylacrylat (2 mol)
- HMDA/CE: Umsetzungsprodukt aus HMDA (1 mol) und CE (2 mol)
- EHX: 2-Äthylhexanol
- EGL: Äthylenglykolmonoäthyläther
- HEGL: Äthylenglykolmonohexyläther
- DPME: Dipropylenglykolmonomethyläther
- PME: Propylenglykolmonomethyläther
- DEGM: Diäthylenglykoldimethyläther
- T: Toluol
- TEX: 2,2,4-Trimethylpentan-1,3-diol-monoisobutyrat (Texanol)
- HST: Harnstoff

### Herstellung der Epoxidharz-Amin-Addukte AI bis AV

### Addukt AI:

In einem mit Thermometer, Rührer und Rückflußkühler ausgestatteten Reaktionsgefäß wurden 190 g EPH I (1 mol Epoxidgruppen) in 132 g Toluol gelöst und auf 60 °C erwärmt. Anschließend wurde eine Mischung von 59 g DEAPA (0,45 mol) und 58 g EHA (0,45 mol) langsam zugegeben, wobei die Reaktionstemperatur, gegebenenfalls unter Kühlung des Ansatzes, auf 75 bis 80 °C gehalten wurde. Die Temperatur wurde so lange gehalten, bis keine Epoxidgruppen mehr nachweisbar waren. Die Adduktlösung wurde unmittelbar weiterverarbeitet; das Addukt enthielt 0,8 mol NH-Gruppen.

### Addukt AII:

In gleicher Weise wie bei AI wurde eine Lösung von 475 g EPH II (1 mol Epoxidgruppen) in 254 g Toluol mit 59 g DEAPA und 58 g EHA (jeweils 0,45 mol) umgesetzt. Das Produkt enthielt 0,8 mol NH-Gruppen.

### Addukt AIII:

In gleicher Weise wie bei AI wurde eine Lösung von 640 g EPH III (2 mol Epoxidgruppen) in 71 g DEGM mit 117 g DEAPA (0,9 mol) und 66 g NBA (0,9 mol) umgesetzt. Das Produkt enthielt 1,6 mol NH-Gruppen in 823 g Festharz.

### Addukt AIV:

In gleicher Weise wie bei AI wurde eine Lösung von 760 g EPH I (4 mol Epoxidgruppen) in 362 g Toluol mit 260 g DEAPA (2 mol) und 114 g HMDA (1 mol) umgesetzt. Das Produkt enthielt 4,0 mol NH-Gruppen in 1134 g Festharz.

### Addukt AV:

In gleicher Weise wie bei AI wurde eine Lösung aus 190 g EPH I (1 mol Epoxidgruppen) in 47,5 g Toluol mit 78 g DEAPA (0,6 mol) und 21 g DEA (0,3 mol, als Modifikator) umgesetzt. Das Produkt enthielt 0,5 mol NH-Gruppen in 289 g Festharz.

### Bindemittel 1:

439 g AI (0,8 mol NH) wurden auf 60 °C erwärmt und nach Zugabe von 182 g BPA (0,8 mol) und 75,8 g PF 91 (2,3 mol CH₂O), auf 80 °C erwärmt. Die Reaktionstemperatur wurde unter Rühren solange gehalten, bis die verbliebene Masse an Formaldehyd auf unter 0,3 % des Ausgangswertes abgesunken war. Das Reaktionsprodukt wies eine Aminzahl von 135 mg/g auf.

Für die Herstellung einer lösungsmittelarmen Form des Bindemittels wurde das Harz mit der vorgesehenen Säuremenge entsprechend einem Neutralisationsgrad von ca. 25 % versetzt und anschließend deionisiertes Wasser langsam unter Rühren zugegeben unter Bildung einer niedrigviskosen Dispersion. Aus dieser wurde bei 30 bis 60 °C ein Großteil des organischen Lösungsmittels durch Destillation unter vermindertem Druck entfernt.

### Bindemittel 2 bis 5:

Die Ansätze, Reaktionsbedingungen und Kennzahlen sind in Tabelle 1 zusammengefaßt. Die Herstellung erfolgte in der beim Bindemittel 1 angegebenen Weise.

**Tabelle 1:**

| Herstellung der Bindemittel 2 bis 5 | | | | | |
|---|---|---|---|---|---|
| Bindemittel | | 2 | 3 | 4 | 5 |
| Aminaddukt | | AII | AIII | AIV | AV |
| Masse der Lösung | in g | 846 | 864 | 1460 | 336.5 |
| Masse Festharz | in g | 592 | 823 | 1134 | 289 |
| Stoffmenge NH-Gruppen | in mol | 0.8 | 1.6 | 4 | 0.5 |
| Formaldehydharzbildner | | BPA | HST | PH | BPA |
| Masse | in g | 160 | 96 | 315 | 96 |
| Stoffmenge | in mol | 0.7 | 1.6 | 3.5 | 0.42 |
| Stoffmengenverhältnis Phenol- bzw. Harnstoff-Gruppen/NH-Gruppen | in mol/mol | 0.88 | 1 | 0.88 | 0.84 |
| PF 91 | | | | | |
| Masse an CH₂O | in g | 60 | 144 | 210 | 38 |
| Stoffmenge an CH₂O | in mol | 2 | 4.8 | 7 | 1.25 |
| Reaktionstemperatur | in °C | 75 | 80 | 60 | 70 |
| Aminzahl | in mg/g | 93 | 137 | 203 | 199 |

### Lackbeispiel 1:

250 g Bindemittel 1 wurden mit 70 g Titandioxid und 30 g eines Aluminiumsilikatpigments (ASP 600 der Fa. Engelhardt) auf der Perlmühle unter Zugabe von 5 g Essigsäure (30 %ige Lösung in Wasser) und 60 g Wasser 2 Stunden lang dispergiert. Die so erhaltene pigmentierte Zubereitung hat eine Korngröße unter 12 µm. Sie wurde mit einer Trockenfilmstärke von 40 µm auf ein blankes Stahlblech appliziert und 72 Stunden bei Raumtemperatur getrocknet. Nach dieser Zeit wurde das beschichtete Blech für 96 Stunden einem Salzsprühtest (ASTM B 117-64) unterzogen. Das Ergebnis ist 2 mm Unterwanderung vom Schnitt, es wurde praktisch keine Bläschenbildung beobachtet.

### Lackbeispiele 2 bis 5:

Analog Lackbeispiel 1 wurden mit den Bindemitteln 2 bis 5 weitere Zubereitungen gemischt und getestet. Die Ergebnisse sind in der Tabelle 2 zusammengefaßt:

**Tabelle 2**

| Lack aus Bindemittel | | 2 | 3 | 4 | 5 |
|---|---|---|---|---|---|
| Trockenfilmdicke | in µm | 50 | 55 | 45 | 50 |
| Trocknungszeit bei Raumtemperatur | in h | 48 | 36 | 72 | 36 |
| Unterwanderung im Salzsprühtest | in mm | 1,5 | 3 | 2 | 2,5 |
| Bläschen | | keine | wenige | wenige | keine |

## Patentansprüche

1. Verfahren zur Beschichtung von Substraten, umfassend die Schritte
a) Herstellen eines bei Raumtemperatur selbstvernetzenden wäßrigen Beschichtungsmittels aus einem wasserverdünnbaren Bindemittel, erhältlich durch
aa) Umsetzung von Epoxid-Amin-Addukten **A** mit Formaldehyd **F** oder Verbindungen, die bei den Umsetzungsbedingungen Formaldehyd freisetzen, und Formaldehydharz-Bildnern **B,** ausgewählt aus Phenolen **B1**, substituierten Harnstoffen und Harnstoffen **B2,** Melamin **B3,** Guanaminen **B4** und Mischungen der genannten Formeladehydharz-Bildnern, zu einem Umsetzungsprodukt **ABF**,
ab) Neutralisieren des Umsetzungsproduktes **ABF** in einem Ausmaß von mindestens 5 %,
ac) Verdünnen des neutralisierten Umsetzungsprodukts **ABF** mit deionisiertem Wasser,
ad) Verarbeiten der Umsetzungsprodukte **ABF** mit Pigmenten, Füllstoffen und anderen Zusatzstoffen zu pigmentierten Lacken durch Dispergieren der Umsetzungsprodukte **ABF** mit den Pigmenten,
b) Applizieren des Beschichtungsmittels aus dem Schritt a) auf ein Substrat, und
c) Trocknen der Beschichtung bei Raumtemperatur,
wobei der Schritt ad) nach aa), ab) oder ac) ausgeführt werden kann.

2. Verfahren nach Anspruch 1, **dadurch gekennzeichnet, daß** als Epoxid-Amin-Addukte **A** im Schritt aa) Umsetzungsprodukte von Epoxidharzen **A1** mit mindestens 2 Epoxidgruppen pro Molekül und einem spezifischen Epoxidgruppengehalt von 1000 bis 5600 mmol/kg und aliphatischen Aminen **A2** mit einem bis 20 Kohlenstoffatomen eingesetzt werden, wobei die Amine **A2** mindestens eine primäre Aminogruppe enthalten.

3. Verfahren nach Anspruch 2, **dadurch gekennzeichnet, daß** als Amine **A2** mit mindestens einer primären Aminogruppe Mischungen eingesetzt werden von Alkylaminen und Dialkylaminoalkylaminen oder Alkylendiaminen und Dialkylaminoalkylaminen.

4. Verfahren nach Anspruch 2, **dadurch gekennzeichnet, daß** die Mischung der Edukte zur Herstellung der Epoxid-Amin-Addukte **A** zusätzlich Verbindungen **A3** enthält, ausgewählt aus Verbindungen **A3c** mit mindestens einer Carboxylgruppe und **A3a** mit mindestens einer sekundären Aminogruppe.

5. Verfahren nach Anspruch 1, **dadurch gekennzeichnet, daß** im Schritt aa) Formaldehydharz-Bildner **B** eingesetzt werden, die mindestens einen Massenanteil von 20 % an aminischen Harzbildnern enthalten, ausgewählt aus Harnstoff und substituierten Harnstoffen **B2**, Melamin **B3**, Guanaminen **B4** sowie Mischungen aus diesen.

6. Verfahren nach Anspruch 1, **dadurch gekennzeichnet, daß** im Schritt aa) die Mengen der Komponenten **A, B** und **F** in der Reaktionsmischung so gewählt werden, daß das Verhältnis der Stoffmenge der in **A** verbliebenen aminischen Wasserstoffatome (NH-Gruppen) zur Stoffmenge der Verbindungen **B** 0,5 : 1 bis 1,1 : 1, und das Verhältnis der Stoffmenge des Formaldehyds zur Stoffmenge der gegenüber Formaldehyd reaktiven

7. Verfahren nach Anspruch 1, **dadurch gekennzeichnet, daß** im Schritt aa) die Epoxid-Amin-Addukte **A** gemeinsam mit Formaldehydharzbildnern **B** und Formaldehyd oder Formaldehyd-abspaltenden Verbindungen F bei einer Temperatur von 50 bis 90 °C umgesetzt werden, bis der Formaldehyd verbraucht ist.

8. Verfahren nach Anspruch 1, **dadurch gekennzeichnet, daß** die Substrate ausgewählt werden aus der Gruppe Metalle Holz, Textilien, Papier, Karton und mineralischen Substraten.

9. Verfahren nach Anspruch 1, **dadurch gekennzeichnet, daß** das Substrat ein Metall ist.

10. Verfahren nach Anspruch 1, **dadurch gekennzeichnet, daß** das Substrat Holz ist

## Claims

1. A process for coating substrates, comprising the following steps
a) preparing an aqueous coating material which is self-crosslinking at room temperature from a water-dilutable binder, obtainable by
aa) reacting epoxy-amine adducts **A** with formaldehyde **F** or compounds which give off formaldehyde under the reaction conditions and formaldehyde resin formers **B** selected from phenols **B1,** substituted ureas and ureas **B2,** melamine **B3,** guanamines **B4,** and mixtures of said formaldehyde resin formers to give a reaction product **ABF**,
ab) neutralizing the reaction product **ABF** to an extent of at least 5%,
ac) diluting the neutralized reaction product **ABF** using deionized water,
ad) processing the reaction products **ABF** with pigments, fillers and other additives to give pigmented paints by dispersing the reaction products **ABF** with the pigments,
b) applying the coating material from step a) to a substrate, and
c) drying the coating at room temperature,
it being possible to carry out step ad) after aa), ab) or ac).

2. A process as claimed in claim 1, wherein epoxy-amine adducts **A** used in step aa) comprise reaction products of epoxy resins **A1** containing at least 2 epoxide groups per molecule and having a specific epoxide group content of from 1000 to 5600 mmol/kg and aliphatic amines **A2** having from one to 20 carbon atoms, the amines **A2** containing at least one primary amino group.

3. A process as claimed in claim 2, wherein mixtures of alkylamines and dialkylaminoalkylamines or alkylenediamines and dialkylaminoalkylamines are used as amines **A2** containing at least one primary amino group.

4. A process as claimed in claim 2, wherein the mixture of the reactants for preparing the epoxy-amine adducts **A** further comprises compounds **A3** selected from compounds **A3c** containing at least one carboxyl group and **A3a** containing at least one secondary amino group.

5. A process as claimed in claim 1, wherein formaldehyde resin formers **B** are used in step aa) which contain at least a mass fraction of 20% of aminic resin formers selected from urea and substituted ureas **B2,** melamine **B3,** guanamines **B4,** and mixtures of these.

6. A process as claimed in claim 1, wherein in step aa) the amounts of the components **A, B** and **F** in the reaction mixture are chosen such that the ratio of the amount of substance of the aminic hydrogen atoms (NH groups) remaining in **A** to the amount of substance of the compounds **B** is from 0.5:1 to 1.1:1 and the ratio of the amount of substance of formaldehyde to the amount of substance of the formaldehyde-reactive groups in **B** is from 0.25:1 to 0.9:1.

7. A process as claimed in claim 1, wherein in step aa) the epoxy-amine adducts **A** are reacted together with formaldehyde resin formers **B** and formaldehyde or formaldehyde donor compounds **F** at a temperature of from 50 to 90°C until the formaldehyde has been consumed.

8. A process as claimed in claim 1, wherein the substrates are selected from the group consisting of metals, wood, textiles, paper, cardboard, and mineral substrates.

9. A process as claimed in claim 1, wherein the substrate is a metal.

10. A process as claimed in claim 1, wherein the substrate is wood.

## Revendications

1. Procédé pour revêtir des subjectiles, comprenant les étapes suivantes :
a) fabrication d'une composition aqueuse de revêtement, autoréticulable à la température ambiante, à partir d'un liant diluable à l'eau, et pouvant être obtenu par
aa) réaction d'adduits époxyde-amine A avec du formaldéhyde F ou des composés qui libèrent du formaldéhyde dans les conditions de la réaction, et de composés B formant une résine de formaldéhyde, choisis parmi les phénols B1, les urées substituées ou les urées B2, la mélamine B3, les guanamines B4 et les mélanges des substances mentionnées ci-dessus formant une résine de formaldéhyde, pour donner un produit de réaction ABF,
ab) neutralisation du produit de réaction ABF, selon une proportion d'au moins 5 %,
ac) dilution du produit de réaction neutralisé ABF avec de l'eau désionisée,
ad) mise en oeuvre des produits de réaction ABF avec des pigments, des matières de charge et d'autres additifs pour donner des peintures pigmentées par dispersion des produits de réaction ABF avec les pigments,
b) application de la composition de revêtement de l'étape a) sur un subjectile, et
c) séchage du revêtement à la température ambiante,
l'étape ad) pouvant être mise en oeuvre après aa), ab) ou ac).

2. Procédé selon la revendication 1, **caractérisé en ce qu'**on utilise en tant qu'adduits époxyde-amine A dans l'étape aa) des produits de la réaction de résines époxydes A1 ayant au moins deux groupes époxy par molécule et une teneur massique en groupes époxy de 1000 à 5600 mmoles/kg, et d'amines aliphatiques A2 ayant de 1 à 20 atomes de carbone, les amines A2 contenant au moins un groupe amino primaire.

3. Procédé selon la revendication 2, **caractérisé en ce qu'**on utilise en tant qu'amines A2 ayant au moins un groupe amino primaire des mélanges d'alkylamines et de dialkylaminoalkylamines, ou d'alkylènediamines et de dialkyaminoalkylamines.

4. Procédé selon la revendication 2, **caractérisé en ce que** le mélange des matières de charge conduisant à la préparation des adduits époxyde-amine A contient en outre des composés A3 choisis parmi les composés A3c ayant au moins un groupe carboxyle et A3a ayant au moins un groupe amino secondaire.

5. Procédé selon la revendication 1, **caractérisé en ce qu'**on utilise dans l'étape aa) des substances B formant une résine de formaldéhyde, qui contiennent au moins 20 % en masse de substances formant une résine aminée, choisies parmi l'urée et les urées substituées B2, la mélamine B3, les guanamines B4, ainsi que leurs mélanges.

6. Procédé selon la revendication 1, **caractérisé en ce que**, dans l'étape aa), les quantités des composants A, B et F dans le mélange réactionnel sont choisies de façon que le rapport entre la quantité de matière des atomes d'hydrogène aminés restant dans A (groupes NH) et la quantité de matière des composés B soit de 0,5:1 à 1,1:1, et que le rapport entre la quantité de matière du formaldéhyde et la quantité de matière des groupes de B réactifs vis-à-vis du formaldéhyde soit de 0,25:1 à 0,9:1.

7. Procédé selon la revendication 1, **caractérisé en ce que**, dans l'étape aa), les adduits époxyde-amine A sont mis à réagir en même temps que les substances B formant une résine de formaldéhyde et du formaldéhyde ou des composés F cédant du formaldéhyde, à une température de 50 à 90°C jusqu'à consommation du formaldéhyde.

8. Procédé selon la revendication 1, **caractérisé en ce que** les subjectiles sont choisis dans l'ensemble comprenant les métaux, le bois, les textiles, le papier, le carton et les subjectiles minéraux.

9. Procédé selon la revendication 1, **caractérisé en ce que** le subjectile est un métal.

10. Procédé selon la revendication 1, **caractérisé en ce que** le subjectile est le bois.
